# EUROPEAN PATENT APPLICATION

(11) **EP 4 838 904 A1**
(43) Date of publication of application: **11.11.2026**
(21) Application number: 24918259.3
(22) Date of filing: 10.12.2024
(51) Int. Cl.: H04Q 11/00

(54) **OPTICAL CROSS-CONNECT SYSTEM AND OPTICAL CROSS-CONNECT NETWORK**

(30) Priority: 17.01.2024 CN 202410073515
(71) Applicant: Huawei Technologies Co., Ltd., Shenzhen, Guangdong 518129 (CN)
(72) Inventor: GUO, Qiang, Shenzhen, Guangdong 518129 (CN); ZHENG, Bofang, Shenzhen, Guangdong 518129 (CN); CHANG, Zhiwu, Shenzhen, Guangdong 518129 (CN); LI, Shiqiang, Shenzhen, Guangdong 518129 (CN)
(74) Representative: Thun, Clemens
(86) International application number: PCT/CN2024/138002
(87) International publication number: WO 2025/152651

(57) **Abstract**

This application provides an optical cross-connect system and an optical cross-connect network, and relates to the field of optical communication technologies. The optical cross-connect system includes a line-side component and a tributary-side component. The line-side component includes a plurality of first wavelength switching modules, a first optical path switching module, and a plurality of second wavelength switching modules. The tributary-side component includes a second optical path switching module. The first wavelength switching module inputs a line-side signal to the first optical path switching module. The second optical path switching module inputs an add signal to the first optical path switching module through optical path switching. The first optical path switching module inputs a pass-through signal in the line-side signal to the second wavelength switching module, receives the add signal, and inputs the add signal to the second wavelength switching module. In this application, signal switching is implemented through optical path switching, so that a high-degree optical cross-connect system can be provided.

## Description

This application claims priority to Chinese Patent Application No. 202410073515.8, filed on January 17, 2024 and entitled "OPTICAL CROSS-CONNECT SYSTEM AND OPTICAL CROSS-CONNECT NETWORK", which is incorporated herein by reference in its entirety.

### TECHNICAL FIELD

This application relates to the field of optical communication technologies, and in particular, to an optical cross-connect system and an optical cross-connect network.

### BACKGROUND

In optical cross-connect networks, with the continuous growth of information transmission bandwidth, the required optical fiber capacity gradually increases. However, the continuous increase in optical fiber capacity of a single optical fiber is constrained. Increasing a quantity of optical fibers is the most direct approach to achieve significant growth in transmission bandwidth, which consequently necessitates increasing the degree of optical cross-connect systems in optical networks. In the optical cross-connect system, wavelength selective switches (wavelength selector switches, WSSs) are used as core switching units, where N 1*N WSSs are interconnected in a mesh (mesh) manner, to implement an N-degree distributed optical cross-connect system. By controlling the 1*N WSSs to route line-side signals on a per-wavelength basis, multi-degree line-side wavelength-level all-optical switching can be implemented.

The WSSs are interconnected via optical backplanes. As the degree N increases, a quantity of optical fiber links interconnected between the WSSs scales as N². This poses significant challenges to reliability of the optical backplanes, and consequently causes significant challenges during evolution of the optical cross-connect systems toward a high degree.

### SUMMARY

This application provides an optical cross-connect system and an optical cross-connect network. By utilizing a three-level cascading architecture, the optical cross-connect system eliminate the need for optical backplanes, thereby allowing the optical cross-connect system to evolve toward a high degree more easily, and achieving optical adding.

According to a first aspect, this application provides an optical cross-connect system, including a line-side component and a tributary-side component, where the line-side component includes a plurality of first wavelength switching modules, a first optical path switching module, and a plurality of second wavelength switching modules, and the tributary-side component includes a second optical path switching module. The first wavelength switching module is connected to the first optical path switching module, the first optical path switching module is connected to the second wavelength switching module, and the second optical path switching module is connected to the first optical path switching module. Each of the first wavelength switching modules is configured to: receive a line-side signal, and output the line-side signal to the first optical path switching module. The first optical path switching module is configured to output a pass-through signal in the line-side signal to a first target second wavelength switching module among the plurality of second wavelength switching modules. The second optical path switching module is configured to: receive an add signal, and output the add signal to the first optical path switching module through optical path switching. The first optical path switching module is further configured to output the add signal to a second target second wavelength switching module among the plurality of second wavelength switching modules. Each second wavelength switching module is configured to output the received signal.

In the solution described in this application, the optical cross-connect system includes the line-side component and the tributary-side component. The line-side component is implemented based on wavelength switching modules and an optical path switching module, and the tributary-side component is implemented based on an optical path switching module. Since the optical path switching module is a device for switching optical paths and does not perform wavelength-based switching, and high-degree cross-connection can be implemented, the optical cross-connect system can provide a high-degree scalable optical cross-connect architecture and support evolution of the optical cross-connect system toward a high degree. In addition, because there is a tributary-side component, optical adding can also be implemented.

In an optional manner, the tributary-side component further includes a third optical path switching module. The first optical path switching module is further configured to output a drop signal in the line-side signal to the third optical path switching module. The third optical path switching module is configured to: receive the drop signal, and output the drop signal through optical path switching.

In the solution described in this application, the tributary-side component further includes an optical path switching module to implement optical dropping, so that when the optical cross-connect system evolves toward a high degree, optical dropping can also be implemented.

In an optional manner, the optical cross-connect system further includes a wavelength conversion component. An input port of the wavelength conversion component is connected to an output port of at least one first optical path switching module in a one-to-one manner, and an output port of the wavelength conversion component is connected to an input port of the at least one first optical path switching module in a one-to-one manner. The wavelength conversion component is configured to: receive a first signal input by the at least one first optical path switching module, and convert the first signal into a second signal, where a wavelength of the first signal is different from a wavelength of the second signal, the wavelength of the first signal suffers from wavelength conflict in the plurality of second wavelength switching modules, and the wavelength of the second signal is free from wavelength conflict in at least one second wavelength switching module; and input the second signal to the at least one first optical path switching module.

In the solution described in this application, when a wavelength conflict exists when the first signal is switched to the second wavelength switching module, the first optical path switching module outputs the first signal to a wavelength switching conversion component, performs wavelength conversion to obtain the second signal, and then inputs the second signal to the first optical path switching module for optical path switching, so that the second signal has no wavelength conflict with a signal input by the at least one second wavelength switching module, thereby implementing more flexible signal transmission.

In an optional manner, the optical cross-connect system further includes a wavelength conversion component. An input port of the wavelength conversion component is connected to a wavelength-dropping output port of at least one third optical path switching module in a one-to-one manner, and an output port of the wavelength conversion component is connected to an add input port of at least one second optical path switching module. The at least one third optical path switching module is further configured to: receive a first signal input by the first optical path switching module, and input the first signal to the wavelength conversion component, where a wavelength of the first signal suffers from wavelength conflict in the plurality of second wavelength switching modules. The wavelength conversion component is configured to: convert the first signal into a second signal, and input the second signal to the at least one second optical path switching module, where a wavelength of the first signal is different from a wavelength of the second signal, and the wavelength of the second signal is free from wavelength conflict in at least one second wavelength switching module. The at least one third optical path switching module is further configured to input the second signal to the first optical path switching module.

In the solution described in this application, when a wavelength conflict exists when the first signal is switched to the second wavelength switching module, the first optical path switching module outputs the first signal to the third optical path switching module, to output the first signal to the wavelength switching conversion component. After performing wavelength conversion on the first signal, the wavelength conversion component obtains the second signal, and then inputs the second signal to the first optical path switching module via the second optical path switching module for optical path switching, so that the second signal has no wavelength conflict with a signal input by the at least one second wavelength switching module, thereby implementing more flexible signal transmission.

In an optional manner, the wavelength conversion component includes a pump light providing module, a multiplexer module, a nonlinear medium module, and a filtering module. The pump light providing module is configured to input a pump light signal corresponding to the first signal to the multiplexer module. The multiplexer module is configured to: receive the pump light signal corresponding to the first signal and the first signal, combine the pump light signal corresponding to the first signal and the first signal to obtain a combined signal, and input the combined signal to the nonlinear medium module. The nonlinear medium module is configured to: obtain a nonlinearly converted signal based on the first signal and the pump light signal in the combined signal, and input the nonlinearly converted signal to the filtering module. The filtering module is configured to filter the nonlinearly converted signal to obtain the second signal, and output the second signal.

In the solution described in this application, the wavelength conversion component directly converts the first signal into the second signal by using the pump light signal corresponding to the first signal, instead of first converting the first signal into an electrical signal and then converting the electrical signal into an optical signal, thereby improving conversion efficiency.

In an optional manner, each first wavelength switching module is connected to at least one input port of each first optical path switching module, and each second wavelength switching module is connected to at least one output port of each first optical path switching module. Each first optical path switching module is configured to: control an optical path between the input port and the output port, and output the pass-through signal and the add signal to a corresponding second wavelength switching module. In this way, all modules in the line-side component are fully connected, so that line-side signal switching can be more flexible.

In an optional manner, there are a plurality of first optical path switching modules, and the line-side component further includes a fourth optical path switching module. Each first wavelength switching module is connected to at least one input port of each fourth optical path switching module, and each second wavelength switching module is connected to at least one output port of each fourth optical path switching module. An add port of each second optical path switching module is connected to at least one input port of each fourth optical path switching module, and a drop port of each third optical path switching module is connected to at least one output port of each fourth optical path switching module. The fourth optical path switching module is configured to: when the at least one first optical path switching module is faulty, replace the at least one first optical path switching module in performing optical switching processing.

In the solution described in this application, there is a backup optical path switching module in the optical cross-connect system. When the at least one first optical path switching module is faulty, the backup optical path switching module is used to perform optical switching processing, so as to perform signal switching protection switching.

In an optional manner, there are a plurality of second optical path switching modules, and the plurality of second optical path switching modules include a first group of switching modules and a second group of switching modules. Each second optical path switching module in the first group of switching modules is connected to the first optical path switching module. Each second optical path switching module in the second group of switching modules is connected to at least two second optical path switching modules in the first group of switching modules. The second group of switching modules is configured to: receive the add signal, and input the add signal to the first group of switching modules through optical path switching, where signals of a same wavelength sent by a same second optical path switching module in the second group of switching modules are sent to different second optical path switching modules in the first group of switching modules. The first group of switching modules is configured to input the add signal to the first optical path switching module through optical path switching.

In the solution described in this application, in the second group of switching modules, a second optical path switching module receives two beams of add signals of a same wavelength, and the second optical path switching module switches the two beams of signals of a first wavelength to two different second optical path switching modules in the first group of switching modules for optical adding, so that signals of a same wavelength can enter a same first optical path switching module for switching.

In an optional manner, each second optical path switching module in the second group of switching modules is connected to each second optical path switching module in the first group of switching modules. In this way, the second optical path switching modules in the two groups are fully connected, so that optical path switching is more flexible.

In an optional manner, there are a plurality of third optical path switching modules, and the plurality of third optical path switching modules include a third group of switching modules and a fourth group of switching modules. Each third optical path switching module in the third group of switching modules is connected to the first optical path switching module. Each third optical path switching module in the fourth group of switching modules is connected to at least two third optical path switching modules in the third group of switching modules. The third group of switching modules is configured to: receive the drop signal, and input the drop signal to the fourth group of switching modules, where signals of a same wavelength received by a same second optical path switching module in the fourth group of switching modules are from different third optical path switching modules in the third group of switching modules. The fourth group of switching modules is further configured to output the drop signal through optical path switching.

In the solution described in this application, a drop signal receiving device is connected to a third optical path switching module in the fourth group of switching modules. During optical dropping, when a plurality of beams of signals of a same wavelength belong to the drop signal receiving device, a same first optical path switching module drops the plurality of beams of signals to different third optical path switching modules in the third group of switching modules, so that the plurality of beams of signals enter the third optical path switching module connected to the drop signal receiving device, where the third optical path switching module belongs to the fourth group of optical path switching modules. In this way, the drop signal receiving device can receive the plurality of beams of signals of the same wavelength.

In an optional manner, for each third optical path switching module in the fourth group of switching modules, the fourth optical path switching module is connected to each third optical path switching module in the third group of switching modules. In this way, the third optical path switching modules in the two groups are fully connected, so that optical path switching is more flexible.

In an optional manner, a quantity of first wavelength switching modules and a quantity of second wavelength switching modules are greater than or equal to 64.

In an optional manner, both the first optical path switching module and the second optical path switching module are micro-electro-mechanical system optical cross-connect apparatuses or waveguide optical switch arrays.

In an optional manner, the first wavelength switching module and the second wavelength switching module are WSSs; or the first wavelength switching module is a demultiplexer (demultiplexer, DMUX), and the second wavelength switching module is a multiplexer (multiplexer, MUX); or the first wavelength switching module and the second wavelength switching module are arrayed waveguide gratings (arrayed waveguide gratings, AWGs).

According to a second aspect, this application further provides an optical cross-connect network, including a plurality of optical cross-connect systems according to any one of the first aspect and the optional manners, where each of the plurality of optical cross-connect systems is connected to at least one other optical cross-connect system.

### BRIEF DESCRIPTION OF DRAWINGS

FIG. 1 is a schematic of networking of optical cross-connect systems according to an example embodiment of this application;
FIG. 2 is a diagram of a structure of an optical cross-connect system according to an example embodiment of this application;
FIG. 3 is a diagram of another structure of an optical cross-connect system according to an example embodiment of this application;
FIG. 4 is a diagram of a structure of a 2-degree optical cross-connect system according to an example embodiment of this application;
FIG. 5 is a diagram of another structure of a 2-degree optical cross-connect system according to an example embodiment of this application;
FIG. 6 is a diagram of three structures of a first optical path switching module according to an example embodiment of this application;
FIG. 7 is a diagram of still another structure of an optical cross-connect system according to an example embodiment of this application;
FIG. 8 is a diagram of yet another structure of an optical cross-connect system according to an example embodiment of this application;
FIG. 9 is a diagram of a structure of a 128-degree optical cross-connect system according to an example embodiment of this application;
FIG. 10 is a diagram of another structure of a 128-degree optical cross-connect system according to an example embodiment of this application;
FIG. 11 is a diagram of still another structure of a 2-degree optical cross-connect system according to an example embodiment of this application;
FIG. 12 is a diagram of still yet another structure of an optical cross-connect system according to an example embodiment of this application;
FIG. 13 is a diagram of a further structure of an optical cross-connect system according to an example embodiment of this application; and
FIG. 14 is a diagram of a structure of a wavelength conversion component according to an example embodiment of this application.

### DESCRIPTION OF EMBODIMENTS

To make objectives, technical solutions, and advantages of this application clearer, the following further describes implementations of this application in detail with reference to the accompanying drawings.

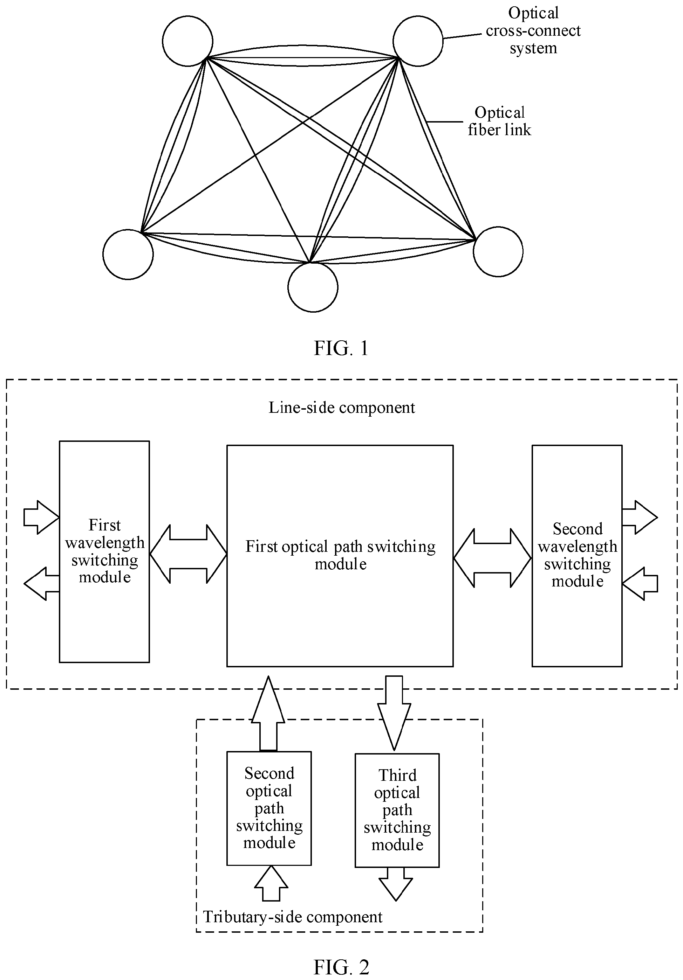

Optical cross-connect (optical cross-connect, OXC) interconnection systems are used in high-capacity optical transmission scenarios such as backbone optical fiber networks. The optical cross-connect interconnection system is referred to as an optical cross-connect system for short. High-speed interconnected networks with direct wavelength transmission are constructed based on networking of optical cross-connect systems. FIG. 1 is a schematic of an optical cross-connect network. The optical cross-connect network is an ultra-high-capacity optical network based on all-optical cross-connection. In FIG. 1, a plurality of optical cross-connect systems are included. The optical cross-connect system is also referred to as an optical cross-connect site. Each optical cross-connect network is connected to at least one other optical cross-connect network. Links between the optical cross-connect systems are optical fiber links. As transmission capacity requirements continuously increase, a quantity of optical fiber links continuously increases, and a degree of optical cross-connect systems also increases. The degree of the optical cross-connect system refers to a quantity of line-side optical fibers connected to the optical cross-connect system. For example, the optical cross-connect systems are transitioning from current 32-degree systems to 64-degree systems, and will evolve toward 128-degree or even 256-degree systems in the future. FIG. 1 shows five optical cross-connect systems. Actually, there are more optical cross-connect systems, and other devices interconnected with the optical cross-connect systems, such as routers, are not shown. The other devices are configured to aggregate and send service data of users to the optical cross-connect systems, or receive service data of users from the optical cross-connect systems and perform subsequent processing, to complete migration of the service data of the users.

Currently, in the optical cross-connect system, wavelength selective switches are used as core switching units, and N 1*N wavelength selective switches are interconnected in a mesh manner. In this way, when the optical cross-connect system is expanded toward an ultra-high degree, as the degree increases, performance of the wavelength selective switches deteriorates sharply, for example, insertion losses occur. In addition, a quantity of optical fiber links interconnected between the wavelength selective switches scales as N². This poses significant challenges to reliability of optical backplanes, and it is difficult to support continuous evolution.

Based on this, embodiments of this application provide an optical cross-connect system. The optical cross-connect system includes a line-side component and a tributary-side component. The line-side component is implemented based on wavelength switching modules and an optical path switching module, and the tributary-side component is implemented based on an optical path switching module. Since the optical path switching module is a device for switching optical paths and does not perform wavelength-based switching, and high-degree cross-connection can be implemented, the optical cross-connect system can provide a high-degree scalable optical cross-connect architecture and support evolution of the optical cross-connect system toward a hundred-degree scale. In addition, due to the presence of a tributary-side component, both optical adding and dropping can be implemented.

FIG. 2 is a diagram of a structure of an optical cross-connect system. Refer to FIG. 2. The optical cross-connect system includes a line-side component and a tributary-side component. The line-side component is configured to receive a line-side signal, and then send the line-side signal to a line side for pass-through or to a tributary side for optical dropping processing. The line-side component is a three-level cascading architecture, and includes a plurality of first wavelength switching modules, a first optical path switching module, and a plurality of second wavelength switching modules. Each first wavelength switching module is connected to one line-side optical fiber. A quantity of line-side optical fibers that can be connected to the plurality of first wavelength switching modules is equal to a degree of the optical cross-connect system. The first wavelength switching module is connected to the first optical path switching module, the first optical path switching module is connected to the second wavelength switching module, and each second wavelength switching module is connected to a line-side optical fiber.

The tributary-side component is configured to perform optical adding/dropping processing, and includes a second optical path switching module and a third optical path switching module. The second optical path switching module is connected to the first optical path switching module to implement optical adding, and the third optical path switching module is connected to the first optical path switching module to implement optical dropping, thereby supporting evolution of the optical cross-connect system toward a high degree. In addition, the second optical path switching module is further connected to an add signal providing device. The add signal providing device is a device that provides an add signal. The third optical path switching module is further connected to a drop signal receiving device. The drop signal receiving device is a device that receives a drop signal. The add signal providing device may be the same as or different from the drop signal receiving device.

During signal transmission, the first wavelength switching module receives the line-side signal from the line-side optical fiber, and a signal (a pass-through signal) that continues to be transmitted on the line side passes through the first optical path switching module, for implementing optical path-level switching, and is input to a first target second wavelength switching module. In the line-side signal, a signal transmitted to the tributary-side component is referred to as a drop signal. The drop signal is input to the third optical path switching module via the first optical path switching module, and the third optical path switching module outputs the drop signal by using an optical path switching function. The optical path switching function is a function of changing an optical path of a signal input from an input port and outputting the signal to an output port. When the optical path switching function is used, signals input from the input port are not split based on wavelengths. For example, signals of a plurality of wavelengths are input from an input port, and the signals of the plurality of wavelengths are output together from a same output port. A signal input by the tributary-side component to the line-side component is referred to as an add signal. The add signal providing device inputs an add signal to the second optical path switching module. The second optical path switching module receives the add signal, and inputs the add signal to the first optical path switching module by using the optical path switching function. The first optical path switching module inputs the add signal to a second target second wavelength switching module. Each second wavelength switching module combines received signals to obtain a combined signal, and inputs the combined signal to the line-side optical fiber, so that the combined signal is transmitted on the line side.

The first target second wavelength switching module may be understood as a second wavelength switching module to which the pass-through signal is switched, and the second target second wavelength switching module may be understood as a second wavelength switching module to which the add signal is switched. Different pass-through signals are destined for different destinations, so that target second wavelength switching modules of the different pass-through signals are different. Different add signals are destined for different destinations, so that target second wavelength switching modules of the different add signals are also different.

In an optional manner, the second optical path switching module and the third optical path switching module may be two separate devices, or may be two logical modules belonging to a same device.

In an optional manner, the first wavelength switching module is an arrayed waveguide grating (arrayed waveguide grating, AWG), and the second wavelength switching module is an AWG. Alternatively, the first wavelength switching module is a WSS, and the second wavelength switching module is a WSS. Alternatively, the first wavelength switching module is a demultiplexer (demultiplexer, DMUX), and the second wavelength switching module is a multiplexer (multiplexer, MUX).

In an optional manner, the first optical path switching module is a micro-electro-mechanical system (micro-electro-mechanical system, MEMS) OXC apparatus, a WSS, or a waveguide optical switch array.

In an optional manner, the second optical path switching module is an MEMS OXC apparatus, a WSS, or a waveguide optical switch array.

It should be noted that the first wavelength switching module and the second wavelength switching module each may be implemented by using a wavelength switching device. Similarly, the second wavelength switching module may also be implemented by using a wavelength switching device. The first optical path switching module to the third optical path switching module each may be implemented by using an optical path switching device.

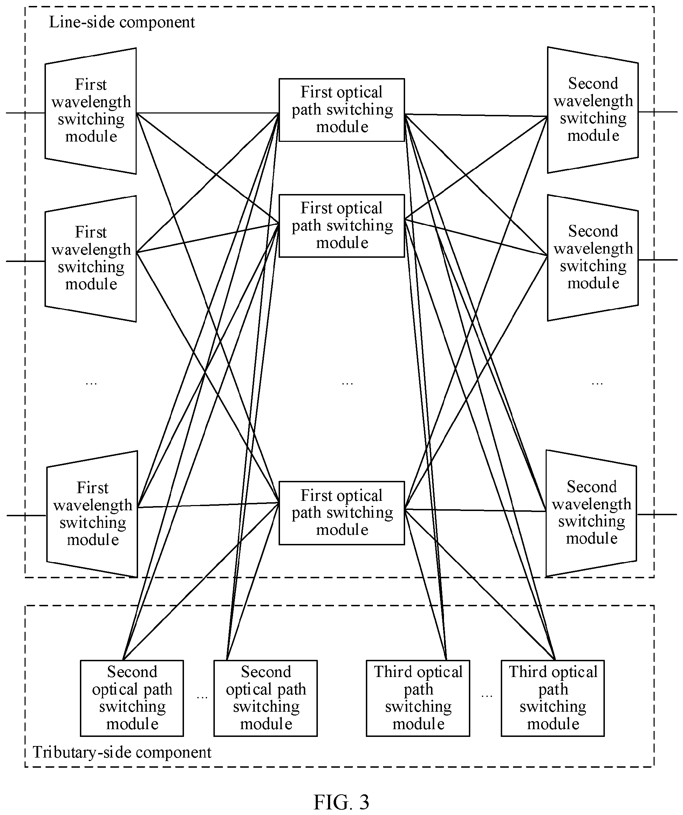

In an optional manner, FIG. 3 is a diagram of another structure of an optical cross-connect system. Refer to FIG. 3. There are N first wavelength switching modules, where N is greater than 1, and N represents the degree of the optical cross-connect system. Each first wavelength switching module includes one input port and M output ports, which is a 1*M wavelength switching module, where each output port outputs a signal of a single wavelength, or outputs a signal of a combination of a plurality of wavelengths, or does not output a signal. There are N second wavelength switching modules. Each second wavelength switching module includes M input ports and one output port, which is an M*1 wavelength switching module, where each input port inputs a signal of a single wavelength, or outputs a signal of a combination of a plurality of wavelengths, or does not output a signal.

There are one or more first optical path switching modules. The first optical path switching module includes a plurality of input ports and a plurality of output ports, and the plurality of input ports and the plurality of output ports can be controlled to implement optical path interconnection.

When there is one first optical path switching module, all output ports of each first wavelength switching module are connected to the plurality of input ports of the first optical path switching module in a one-to-one manner; and all input ports of each second wavelength switching module are connected to the plurality of output ports of the first optical path switching module in a one-to-one manner. In this way, a signal output by each first wavelength switching module can enter the first optical path switching module, and a signal output by the first optical path switching module can enter each second wavelength switching module.

When there are a plurality of first optical path switching modules, each first wavelength switching module is connected to at least one input port of each first optical path switching module, and ports of the first wavelength switching module and the first optical path switching module are connected in a one-to-one manner; and each second wavelength switching module is connected to at least one output port of each first optical path switching module, and ports of the second wavelength switching module and the first optical path switching module are connected in a one-to-one manner. In this way, a signal output by each first wavelength switching module can enter each first optical path switching module, and a signal output by each first optical path switching module can enter each second wavelength switching module.

There are one or more second optical path switching modules. Each second optical path switching module includes a first add port and an add input port, where the first add port is configured to connect to the first optical path switching module, the add input port is configured to connect to an add signal providing device on a tributary side, and a quantity of add input ports is the same as or different from a quantity of first add ports. Different second optical path switching modules include a same quantity or different quantities of first add ports, and the first add port and the add input port can be controlled to change an optical path.

When there is one second optical path switching module and one first optical path switching module, all first add ports of the second optical path switching module are connected to a plurality of input ports of the first optical path switching module in a one-to-one manner.

When there is one second optical path switching module and a plurality of first optical path switching modules, the second optical path switching module is connected to each first optical path switching module. The second optical path switching module includes a plurality of add port groups, and a quantity of first add ports in each add port group is greater than or equal to 1. A port in each add port group is connected to an input port of one first optical path switching module in a one-to-one manner, and different add port groups correspond to different first optical path switching modules.

When there are a plurality of second optical path switching modules and one first optical path switching module, each second optical path switching module is connected to the first optical path switching module. For each second optical path switching module, a quantity of first add ports is greater than or equal to 1, and all first add ports are connected to input ports of the first optical path switching module in a one-to-one manner.

When there are a plurality of second optical path switching modules and a plurality of first optical path switching modules, each second optical path switching module is connected to each first optical path switching module. Each second optical path switching module includes a plurality of add port groups, and a quantity of first add ports in each add port group is greater than or equal to 1. For each second optical path switching module, a port in one add port group is connected to an input port of one first optical path switching module in a one-to-one manner, and different add port groups correspond to different first optical path switching modules. In this way, an add signal of each second optical path switching module can be input to any first optical path switching module.

Based on the foregoing connection relationships, for each second optical path switching module, after an add input port of the second optical path switching module receives an add signal, an optical path between the add input port and the first add port is controlled, so that the add signal is input to the first optical path switching module via the first add port.

There are one or more third optical path switching modules. Each third optical path switching module includes a first drop port and a drop output port, where the first drop port is connected to the first optical path switching module, the drop output port is connected to a drop signal receiving device on the tributary side, and a quantity of drop output ports is the same as or different from a quantity of first drop ports. Different third optical path switching modules include a same quantity or different quantities of first drop ports, and the first drop port and the drop output port can be controlled to change an optical path.

When there is one third optical path switching module and one first optical path switching module, all first drop ports of the third optical path switching module are connected to a plurality of output ports of the first optical path switching module in a one-to-one manner.

When there is one third optical path switching module and a plurality of first optical path switching modules, the third optical path switching module is connected to each first optical path switching module. The third optical path switching module includes a plurality of drop port groups, and a quantity of first drop ports in each drop port group is greater than or equal to 1. A port in each drop port group is connected to an output port of one first optical path switching module in a one-to-one manner, and different drop port groups correspond to different first optical path switching modules.

When there are a plurality of third optical path switching modules and one first optical path switching module, each third optical path switching module is connected to the first optical path switching module. For each third optical path switching module, a quantity of first drop ports is greater than or equal to 1, and all first drop ports are connected to at least one output port of the first optical path switching module in a one-to-one manner.

When there are a plurality of third optical path switching modules and a plurality of first optical path switching modules, each third optical path switching module is connected to each first optical path switching module. Each third optical path switching module includes a plurality of drop port groups, and a quantity of first drop ports in each drop port group is greater than or equal to 1. For each third optical path switching module, a port in one drop port group is connected to an output port of one first optical path switching module in a one-to-one manner, and different drop port groups correspond to different first optical path switching modules. In this way, a drop signal output by the first optical path switching module can be input to any third optical path switching module.

For each third optical path switching module, after a first drop port of the third optical path switching module receives a drop signal, an optical path between the first drop port and the drop output port is controlled, so that the drop signal is output to the drop signal receiving device via the first drop port.

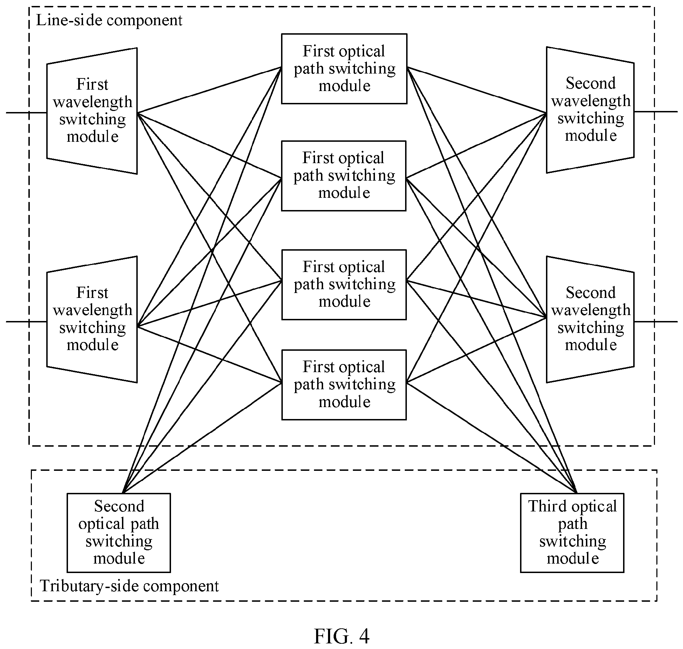

For better understanding of the architecture shown in FIG. 3, FIG. 4 shows an example of a low-degree optical cross-connect system. Refer to FIG. 4. There are two first wavelength switching modules and two second wavelength switching modules, which are respectively 1*4 WSSs and 4*1 WSSs. There are four first optical path switching modules, and each first optical path switching module is a 3*3 MEMS OXC apparatus. There is one second optical path switching module and one third optical path switching module, and both the second optical path switching module and the third optical path switching module are 4*4 MESM OXC apparatuses. During connection, the second optical path switching module and the third optical path switching module each provides one port for connection.

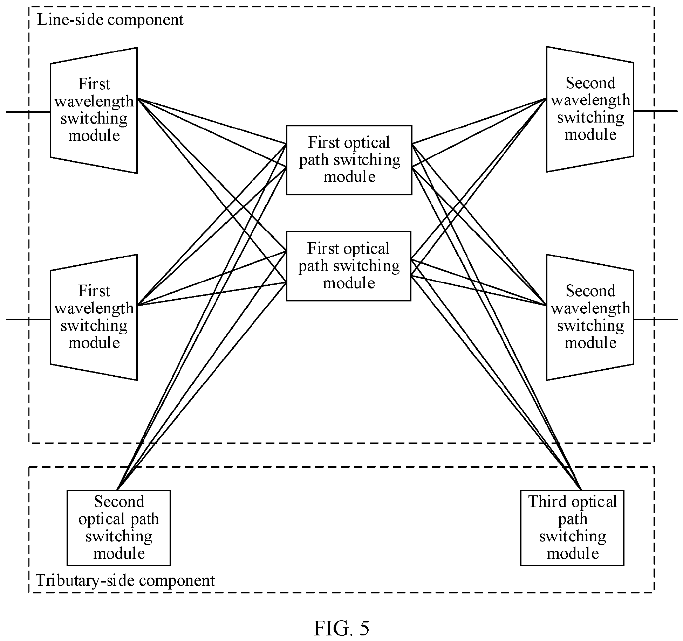

FIG. 5 shows an example of a low-degree optical cross-connect system. Refer to FIG. 5. There are two first wavelength switching modules and two second wavelength switching modules, which are respectively 1*4 WSSs and 4*1 WSSs. There are two first optical path switching modules, and each first optical path switching module is a 6*6 MESM OXC apparatus. There is one second optical path switching module and one third optical path switching module, and both the second optical path switching module and the third optical path switching module are 4*4 MESM OXC apparatuses. During connection, the second optical path switching module and the third optical path switching module each provides two ports for one-to-one connection.

It should be noted that, wavelengths of signals input by different first wavelength switching modules among a plurality of first wavelength switching modules to one first optical path switching module are the same or different. This is not limited in this embodiment of this application.

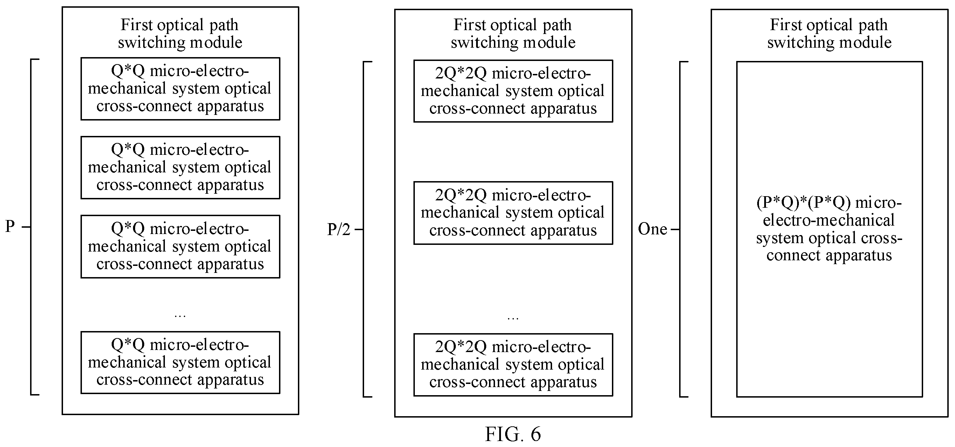

Optionally, when there are a plurality of first optical path switching modules, there are one or more port connections between each first wavelength switching module and each first optical path switching module. When the first wavelength switching module and the first optical path switching module each provides one port for connection, it indicates that a quantity of first optical path switching modules is equal to a quantity of output ports of each first wavelength switching module. Refer to FIG. 3 and FIG. 4. When the first wavelength switching module and the first optical path switching module each provides a plurality of ports for connection, it indicates that a quantity of first optical path switching modules is less than a quantity of output ports of each first wavelength switching module. Refer to FIG. 5. In this way, a higher port count of each first optical path switching module indicates a smaller quantity of first optical path switching modules. For example, refer to FIG. 6. The first optical path switching module needs to provide P*Q input ports and P*Q output ports. The first optical path switching module may include P Q*Q MEMS OXC apparatuses, P/2 2Q*2Q MEMS OXC apparatuses, P/3 3Q*3Q MEMS OXC apparatuses, or one (P*Q)*(P*Q) MEMS OXC apparatus. In this way, since the cost of the 2Q*2Q MEMS OXC apparatus is less than twice the cost of the Q*Q MEMS OXC apparatus, making the MEMS OXC apparatus with a higher degree in a lower cost.

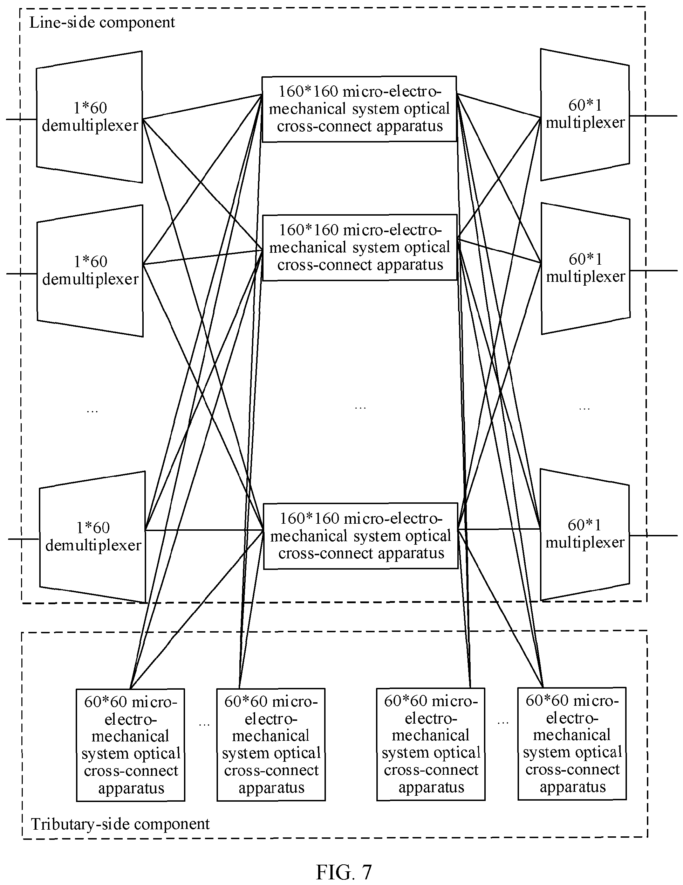

Optionally, the first wavelength switching module is a DMUX, and the second wavelength switching module is a MUX. An optical cross-connect system may be used in a C+L band. FIG. 7 shows a case in which an optical cross-connect system is used in a C+L band. A spectral width of the C+L band is 12 THz. It is assumed that a transmission rate of a signal of each wavelength is 800 Gb/s, and each optical fiber can accommodate signals of a maximum of 60 wavelengths for transmission. For 128-degree optical switching, there are 128 first wavelength switching modules, each being a 1*60 DMUX. There are 60 first optical path switching modules, each being a 160*160 first MEMS OXC apparatus. There are 128 second wavelength switching modules, each being a 60*1 MUX. There are 32 second optical path switching modules, each being a 60*60 second MEMS OXC apparatus. There are 32 third optical path switching modules, each being a 60*60 third MEMS OXC apparatus.

On a line side, 128 line-side optical fibers are respectively connected to input ports of the 128 1*60 DMUXs. 60 output ports of each 1*60 DMUX are respectively connected to one input port of the 60 first MEMS OXC apparatuses. 60 input ports of each 60*1 MUX are also respectively connected to one output port of the 60 first MEMS OXC apparatuses.

On a tributary side, 60 add ports of each second MEMS OXC apparatus are respectively connected to one input port of the 60 first MEMS OXC apparatuses, for optical adding. 60 drop ports of each third MEMS OXC apparatus are respectively connected to one output port of the 60 first MEMS OXC apparatuses, for optical dropping.

During signal transmission, each DMUX allocates signals of 60 wavelengths in each optical fiber to the 60 output ports of the DMUX, and each output port has a signal of one wavelength. The signals allocated by the DMUX pass through the first MEMS OXC apparatus to implement an optical path switching function, are switched from any input port of the first MEMS OXC apparatus to any output port, and enter the 60*1 MUX for transmission or enter the third MEMS OXC apparatus for optical dropping. The second MEMS OXC apparatus inputs an add signal to the first MEMS OXC apparatus. The add signal passes through a first MEMS OXC apparatus to implement the optical path switching function, is switched from any input port of the first MEMS OXC apparatus to any output port, and also enters the 60*1 MUX. The 60*1 MUX combines the received signals and outputs a combined signal via the output port.

It should be noted that, in FIG. 7, wavelengths of signals for which all first optical path switching modules are responsible for switching are the same or different.

In an optional manner, there are a plurality of first optical path switching modules. When some or all of the first optical path switching modules are faulty, to avoid affecting normal signal transmission, a line-side component further includes a fourth optical path switching module. The fourth optical path switching module is connected to the first wavelength switching module, the fourth optical path switching module is connected to the second wavelength switching module, and the fourth optical path switching module is connected to the second optical path switching module and the third optical path switching module.

When there is at least one faulty first optical path switching module, the first wavelength switching module inputs a target line-side signal to the fourth optical path switching module. The target line-side signal is a signal originally sent to the at least one faulty first optical path switching module. The second optical path switching module inputs a target add signal to the fourth optical path switching module. The target add signal is a signal originally sent to the at least one first optical path switching module. The fourth optical path switching module replaces the at least one first optical path switching module in performing an optical path switching function on the target line-side signal and the target add signal, inputting a pass-through signal to the second wavelength switching module, and inputting a target drop signal in the target line-side signal to the third optical path switching module. The second wavelength switching module receives the signal input by the fourth optical path switching module and outputs the signal. The second optical path switching module receives the target drop signal and outputs the target drop signal.

Optionally, for each fourth optical path switching module, each first wavelength switching module provides at least one backup output port to connect to the fourth optical path switching module, each second wavelength switching module provides at least one backup input port to connect to the fourth optical path switching module, each second optical path switching module provides at least one second add port to connect to the fourth optical path switching module, and each third optical path switching module provides at least one second drop port to connect to the fourth optical path switching module. For a specific connection manner, refer to a manner of connection between the first optical path switching module and other modules. Details are not described herein again.

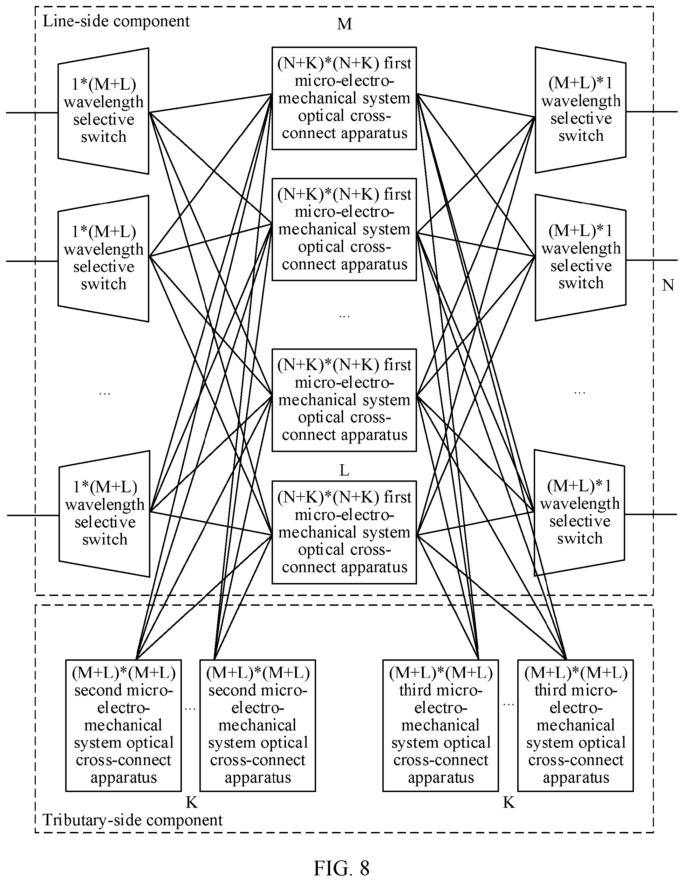

Optionally, the first optical path switching module and the fourth optical path switching module have a same quantity or different quantities of ports. FIG. 8 is a diagram of a structure of an optical cross-connect system when a first optical path switching module and a fourth optical path switching module have a same quantity of ports. Refer to FIG. 8. There are N first wavelength switching modules, each being a 1*(M+L) WSS including one input port, M output ports, and L backup output ports. There are N second wavelength switching modules, each being an (M+L)*1 WSS including one output port, M input ports, and L backup input ports. There are M first optical path switching modules, each being an (N+K)*(N+K) first MEMS OXC apparatus including N+K input ports and N+K output ports. There are L fourth optical path switching modules, each being an (N+K)*(N+K) first MEMS OXC apparatus including N+K input ports and N+K output ports. There are K second optical path switching modules and K third optical path switching modules. The second optical path switching modules are (M+L)*(M+L) second MEMS OXC apparatuses, and the third optical path switching modules are (M+L)*(M+L) third MEMS OXC apparatuses. Each second optical path switching module includes M first add ports and L second add ports, and each third optical path switching module includes M first drop ports and L second drop ports.

On a line side, for ease of description, in the first wavelength switching module, the backup output port and the output port are collectively referred to as an output port, and in the second wavelength switching module, the backup input port and the input port are collectively referred to as an input port. The N 1*(M+L) WSSs have N input ports, and N line-side optical fibers are connected to the N input ports in a one-to-one manner. Each 1*(M+L) WSS provides M+L output ports, and the M+L output ports are respectively connected to one input port of M+L first MEMS OXC apparatuses. Each (M+L)*1 WSS provides M+L input ports, and the M+L input ports are respectively connected to one output port of the M+L first MEMS OXC apparatuses. The N (M+L)*1 WSSs have N output ports, and the N output ports are connected to the N line-side optical fibers in a one-to-one manner.

On a tributary side, for ease of description, the first add port and the second add port are collectively referred to as an add port, and the first drop port and the second drop port are collectively referred to as a drop port. Each first MEMS OXC apparatus provides K input ports, and the K input ports are respectively connected to one add port of the K second MEMS OXC apparatuses, for optical adding. Each first MEMS OXC apparatus provides K output ports, and the K output ports are respectively connected to one drop port of the K third MEMS OXC apparatuses, for optical dropping.

When there is no faulty first MEMS OXC apparatus among the M first MEMS OXC apparatuses, each 1*(M+L) WSS allocates received signals to the M output ports based on wavelengths for output, and each output port outputs a signal of a single wavelength, or outputs a signal of a plurality of wavelengths, or does not output a signal. Signals output from the M output ports pass through the M first MEMS OXC apparatuses to implement the optical path switching module, and are switched from any input port of each first MEMS OXC apparatus to any output port of the first MEMS OXC apparatus. The signals enter the M input ports of the (M+L)*1 WSS, or some of the signals enter the third MEMS OXC apparatus for optical dropping. On the tributary side, the second MEMS OXC apparatus inputs an add signal to the first MEMS OXC apparatus, and the add signal also enters the (M+L)*1 WSS. The (M+L)*1 WSS combines the received signals and outputs a combined signal via the output port. When there are G faulty first MEMS OXC apparatuses among the M first MEMS OXC apparatuses, each 1*(M+L) WSS outputs a target line-side signal (a signal for which the faulty first MEMS OXC apparatus is originally responsible for switching) to G first MEMS OXC apparatuses among the L first MEMS OXC apparatuses. Each second MEMS OXC apparatus outputs a target add signal (a signal for which the faulty first MEMS OXC apparatus is originally responsible for switching) to the G first MEMS OXC apparatuses, and the G first MEMS OXC apparatuses switch the received signals, so that the optical cross-connect system can still work normally.

It should be noted that the optical cross-connect system is further connected to a controller, and a signal receiver feeds back, to the controller, whether a signal is received. If a signal for which a first optical path switching module is responsible for switching is not received, it indicates that the first optical path switching module is faulty. The controller switches, to the fourth optical path switching module for switching, the signal for which the faulty first optical path switching module is responsible for switching.

It should be further noted that a quantity of fourth optical path switching modules may be set based on an actual requirement. In FIG. 8, the first optical path switching module and the fourth optical path switching module have a same quantity of ports. In practice, the first optical path switching module and the fourth optical path switching module may alternatively have different quantities of ports. For example, the first optical path switching module has 160 input ports and 160 output ports, and the fourth optical path switching module has 320 input ports and 320 output ports. That is, a quantity of signals switched by one fourth optical path switching module is twice a quantity of signals switched by the first optical path switching module. If two first optical path switching modules are faulty, one fourth optical path switching module may be used to replace the two faulty first optical path switching modules.

In an optional manner, when the optical cross-connect system supports a 128-degree scale, there are a plurality of structures of the optical cross-connect system. The following provides Manner 1 to Manner 3.

Manner 1: In the optical cross-connect system, there are 128 first wavelength switching modules and 128 second wavelength switching modules, each first wavelength switching module includes one input port and 60 output ports, and each second wavelength switching module includes 60 input ports and one output port. There are 60 first optical path switching modules, and each first optical path switching module includes 160 input ports and 160 output ports. There are 32 second optical path switching modules, and each second optical path switching module includes 60 add input ports and 60 add ports. There are 32 third optical path switching modules, and each third optical path switching module includes 60 drop output ports and 60 drop ports. That is, in the optical cross-connect system, during connection, the second optical path switching module and the third optical path switching module each provides one port for connection. Ports connected between different modules are different.

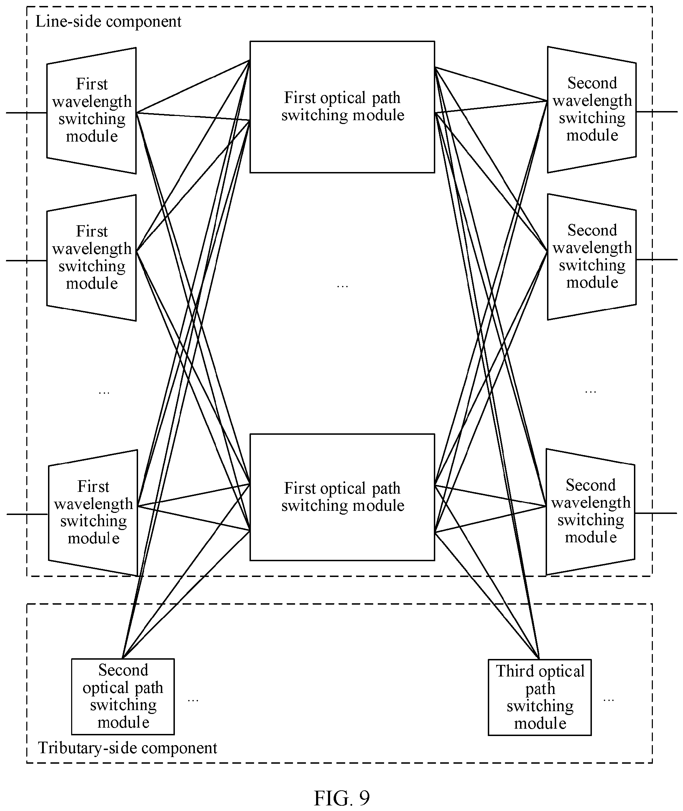

Manner 2: In the optical cross-connect system, there are 128 first wavelength switching modules and 128 second wavelength switching modules, each first wavelength switching module includes one input port and 60 output ports, and each second wavelength switching module includes 60 input ports and one output port. There are 30 first optical path switching modules, and each first optical path switching module includes 320 input ports and 320 output ports. There are 32 second optical path switching modules, and each second optical path switching module includes 60 add input ports and 60 add ports. There are 32 third optical path switching modules, and each third optical path switching module includes 60 drop output ports and 60 drop ports. That is, in the optical cross-connect system, during connection, the second optical path switching module and the third optical path switching module each provides two ports for one-to-one connection. Ports connected between different modules are different. Refer to FIG. 9.

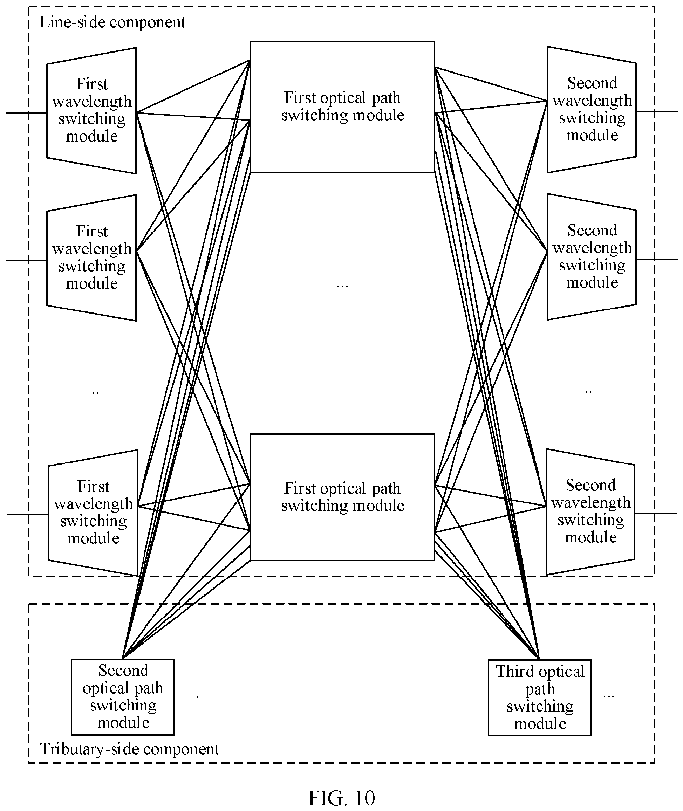

Manner 3: In the optical cross-connect system, there are 128 first wavelength switching modules and 128 second wavelength switching modules, each first wavelength switching module includes one input port and 60 output ports, and each second wavelength switching module includes 60 input ports and one output port. There are 30 first optical path switching modules, and each first optical path switching module includes 320 input ports and 320 output ports. There are 16 second optical path switching modules, and each second optical path switching module includes 120 add input ports and 120 add ports. There are 16 third optical path switching modules, and each third optical path switching module includes 120 drop output ports and 120 drop ports. That is, in the optical cross-connect system, during connection, two modules of the line-side component each provides two ports for one-to-one connection; during connection between each second optical path switching module and each first optical path switching module, the second optical path switching module and the first optical path switching module each provide four ports for one-to-one connection; during connection between each third optical path switching module and each first optical path switching module, the third optical path switching module and the first optical path switching module each provide four ports for one-to-one connection. Ports connected between different modules are different. Refer to FIG. 10.

Optionally, when the optical cross-connect system supports a 256-degree scale, in the optical cross-connect system, there are 256 first wavelength switching modules and 256 second wavelength switching modules, each first wavelength switching module includes one input port and 60 output ports, and each second wavelength switching module includes 60 input ports and one output port. There are 60 first optical path switching modules, and each first optical path switching module includes 320 input ports and 320 output ports. There are 64 second optical path switching modules, and each second optical path switching module includes 60 add input ports and 60 add ports. There are 64 third optical path switching modules, and each third optical path switching module includes 60 drop output ports and 60 drop ports. That is, in the optical cross-connect system, during connection, the second optical path switching module and the third optical path switching module each provides one port for connection. Ports connected between different modules are different.

It should be noted that, in the foregoing several manners, only the first optical path switching modules exist. Assuming that the first optical path switching module is the same as the fourth optical path switching module, when both the first optical path switching module and the fourth optical path switching module exist, a sum of a quantity of first optical path switching modules and a quantity of fourth optical path switching modules is 60 in Manner 1 and Manner 4, and a sum of a quantity of first optical path switching modules and a quantity of fourth optical path switching modules is 30 in Manner 2 and Manner 3. A quantity of first optical path switching modules and a quantity of fourth optical path switching modules are set based on an actual requirement.

In an optional manner, when each first optical path switching module is responsible for switching a signal of one wavelength, if a plurality of beams of signals of a first wavelength are input to a second optical path switching module at the same time, because the signals of the first wavelength are input to a same first optical path switching module, and each second optical path switching module can input only one beam of signals of the first wavelength to the first optical path switching module, optical adding of the plurality of beams of signals cannot be performed at the same time. To resolve this problem, a networking mode of a plurality of second optical path switching modules is improved. The plurality of second optical path switching modules are grouped into two groups, represented as a first group of switching modules and a second group of switching modules. The first group of switching modules and the second group of switching modules each include a plurality of second optical path switching modules. Each second optical path switching module in the second group of switching modules is connected to at least two second optical path switching modules in the first group of switching modules. For example, second optical path switching modules in different groups are connected in pairs. Quantities of second optical path switching modules in the two groups may be the same or may be different.

In the first group of switching modules and the second group of switching modules, each second optical path switching module includes an add port and an add input port. In the first group of switching modules, the add input ports of each second optical path switching module are grouped into a plurality of add input port groups, and a quantity of ports in each add input port group is greater than or equal to 1. In the second group of switching modules, the add ports of each second optical path switching module are grouped into a plurality of add port groups. In the second group of switching modules, a port in one add port group is connected to a port in one add input port group in the first group of switching modules in a one-to-one manner, and different add port groups correspond to different second optical path switching modules in the first group of switching modules. In the second group of switching modules, the add input port of the second optical path switching module is configured to connect to an add signal providing device. In the first group of switching modules, the add port of the second optical path switching module is connected to the first optical path switching module.

During signal transmission, the add signal providing device inputs add signals to the second group of switching modules, and a second optical path switching module in the second group of switching modules receives the add signals. Assuming that the add signals include signals of a same wavelength, the signals of the same wavelength are sent to different second optical path switching modules in the first group of switching modules. The different second optical path switching modules input the signals of the same wavelength to a same first optical path switching module.

Similarly, when each first optical path switching module is responsible for switching a signal of one wavelength, if a drop signal receiving device receives a plurality of beams of signals of a first wavelength at the same time, the signals of the first wavelength are output to a same first optical path switching module for optical dropping, the first optical path switching module can input only one beam of signals of the first wavelength to each third optical path switching module, and each optical path switching module can send only one beam of signals of the first wavelength to the connected drop signal receiving device, the plurality of beams of signals cannot be dropped to a same drop signal receiving device at the same time. To resolve this problem, a networking mode of a plurality of third optical path switching modules is improved. The plurality of third optical path switching modules are grouped into two groups, represented as a third group of switching modules and a fourth group of switching modules. The third group of switching modules and the fourth group of switching modules each include a plurality of third optical path switching modules. Each third optical path switching module in the fourth group of switching modules is connected to at least two third optical path switching modules in the third group of switching modules. For example, third optical path switching modules in different groups are connected in pairs. Quantities of third optical path switching modules in the two groups may be the same or may be different.

In the third group of switching modules and the fourth group of switching modules, each third optical path switching module includes a drop port and a drop output port. In the third group of switching modules, the drop output ports of each third optical path switching module are grouped into a plurality of drop output port groups, and a quantity of ports in each drop output port group is greater than or equal to 1. In the fourth group of switching modules, the drop ports of each third optical path switching module are grouped into a plurality of drop port groups. In the fourth group of switching modules, a port in one drop port group is connected to a port in one drop output port group in the third group of switching modules in a one-to-one manner, and different drop port groups correspond to different third optical path switching modules in the third group of switching modules. In the fourth group of switching modules, the drop output port of the third optical path switching module is configured to connect to a drop signal receiving device. In the third group of switching modules, the drop port of the third optical path switching module is connected to the first optical path switching module.

During signal transmission, the third group of switching modules receive drop signals. If the drop signals include signals of a same wavelength and the signals of the same wavelength are sent to a same drop signal receiving device, different third optical path switching modules in the third group of switching modules receive the signals of the same wavelength. The different third optical path switching modules send the signals of the same wavelength to a same third optical path switching module in the fourth group of switching modules, and the third optical path switching module in the fourth group of switching modules outputs the signals of the same wavelength to the drop signal receiving device.

In this way, in the second group of switching modules, if a second optical path switching module receives a plurality of beams of add signals of a first wavelength, the second optical path switching module switches the plurality of beams of signals to a plurality of different second optical path switching modules in the first group of switching modules for optical adding, so that signals of a same wavelength can enter a same first optical path switching module. Similarly, during optical dropping, a same first optical path switching module can also perform optical dropping on a plurality of beams of signals of a same wavelength at the same time, and the plurality of beams of signals belong to a same drop signal receiving device.

It should be noted that, in the foregoing descriptions, when a second optical path switching module in the first group of switching modules is connected to a second optical path switching module in the second group of switching modules, quantities of ports connected between every two second optical path switching modules may be the same or may be different. When a third optical path switching module in the third group of switching modules is connected to a third optical path switching module in the fourth group of switching modules, quantities of ports connected between every two third optical path switching modules may be the same or may be different.

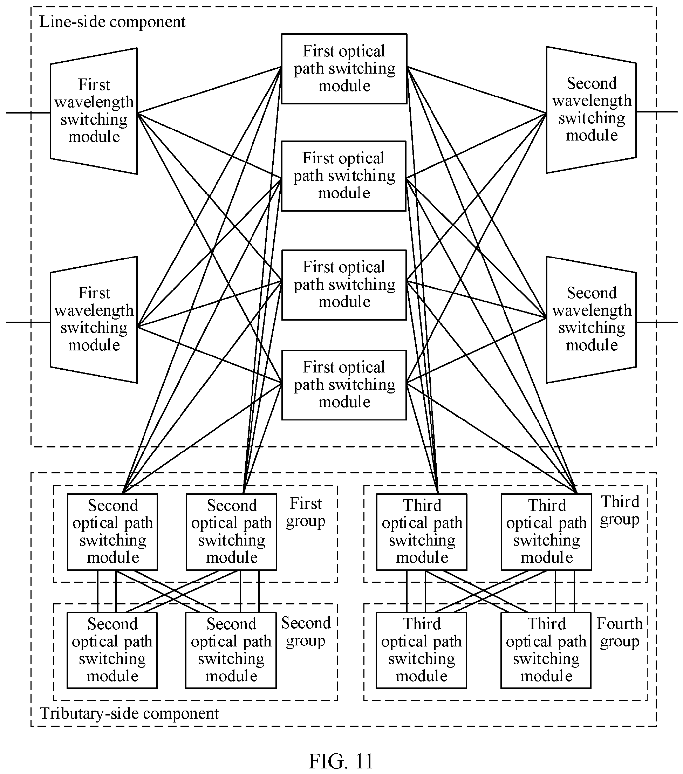

For example, refer to FIG. 11. The first group of switching modules and the second group of switching modules each include two second optical path switching modules, and each second optical path switching module is 4*4. The third group of switching modules and the fourth group of switching modules each include two third optical path switching modules, and each third optical path switching module is 4*4. There are four first optical path switching modules, and there are two first wavelength switching modules and two second wavelength switching modules, which are respectively 1*4 WSSs and 4*1 WSSs. A second optical path switching module on the left side in the second group of switching modules is connected to an add signal providing device A, and outputs two beams of signals of a wavelength A. The second optical path switching module on the left side receives the two beams of signals, and sends the two beams of signals respectively to two second optical path switching modules in the first group of switching modules. Both the two second optical path switching modules input the received signals to a same first optical path switching module. A third optical path switching module on the right side in the fourth group of switching modules is connected to a drop signal receiving device B, and receives two beams of signals of a wavelength B. Two third optical path switching modules in the third group of switching modules separately receive one beam of signals of the wavelength B, and send the beam of signals to the third optical path switching module on the right side in the fourth group of switching modules. The third optical path switching module on the right side in the fourth group of switching modules outputs the two beams of signals of the wavelength B to the device B.

In an optional manner, wavelengths of signals received by a same second wavelength switching module are usually different. In some cases, the first optical path switching module cannot input signals of a same wavelength to different second wavelength switching modules. When the first optical path switching module inputs signals of a same wavelength to a same second wavelength switching module, a wavelength conflict exists when the second wavelength switching module combines the signals for output. For example, a line-side signal input by each first wavelength switching module includes a signal of a first wavelength, and optical dropping is not performed on the signal of the first wavelength. In this case, add signals further include signals of the first wavelength. In this case, there are a plurality of beams of signals of the first wavelength in a same second wavelength switching module. In this embodiment of this application, a wavelength of a signal can be converted by using a wavelength conversion component, so that wavelengths of signals input to a same second wavelength switching module are different.

The optical cross-connect system further includes a wavelength conversion component. When there is a signal that suffers a wavelength conflict, the wavelength conversion component converts a signal of the first wavelength into a signal of a second wavelength, where the first wavelength is different from the second wavelength. In this way, after the signal of the first wavelength and the signal of the second wavelength are input to a same second wavelength switching module, there is only one beam of signals of the second wavelength in the second wavelength switching module, and no conflict exists when the signals are combined for output.

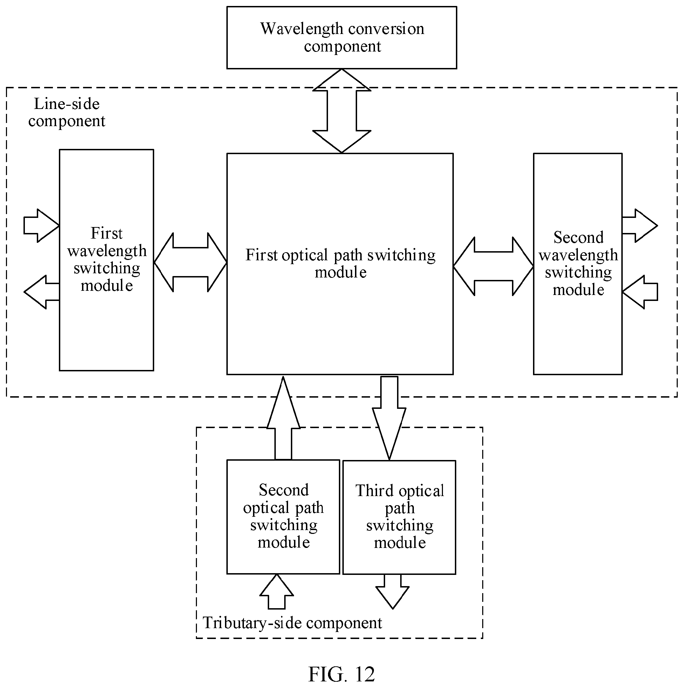

Optionally, FIG. 12 provides still yet another structure of an optical cross-connect system. Refer to FIG. 12. A wavelength conversion component is connected to a first optical path switching module. For example, there are a plurality of first optical path switching modules, and the wavelength conversion component is connected to X first optical path switching modules, where X is greater than or equal to 1. Specifically, the wavelength conversion component includes input ports and output ports. Each of the X first optical path switching modules includes input ports and output ports. One or more output ports of each first optical path switching module are connected to the input ports of the wavelength conversion component in a one-to-one manner, and one or more input ports of each first optical path switching module are connected to the output ports of the wavelength conversion component in a one-to-one manner. Herein, the presence of a plurality of port connections indicates that a same first optical path switching module is capable of simultaneously outputting a plurality of beams of signals to undergo wavelength conversion.

In the X first optical path switching modules, it is assumed that a target first optical path switching module is configured to input a first signal to a same second wavelength switching module, and in the second wavelength switching module, there is a signal having a same wavelength as the first signal. The target first optical path switching module inputs the first signal to the wavelength conversion component. The wavelength conversion component converts the first signal into a second signal, and inputs the second signal to one of the X first optical path switching modules. A wavelength of the first signal is different from a wavelength of the second signal, and the wavelength of the second signal does not conflict with a wavelength of another signal sent to at least one second wavelength switching module. The first optical path switching module inputs the second signal to one of the at least one second wavelength switching module by using an optical path switching function. The second wavelength switching module combines the second signal and received other signals, and outputs a combined signal. In this way, when a wavelength conflict exists, a wavelength can be converted by using the wavelength conversion component, and the wavelength conversion component is directly connected to the first optical path switching module, which does not affect an optical adding/dropping function. The first signal and the second signal may pass through a same first optical path switching module or different first optical path switching modules.

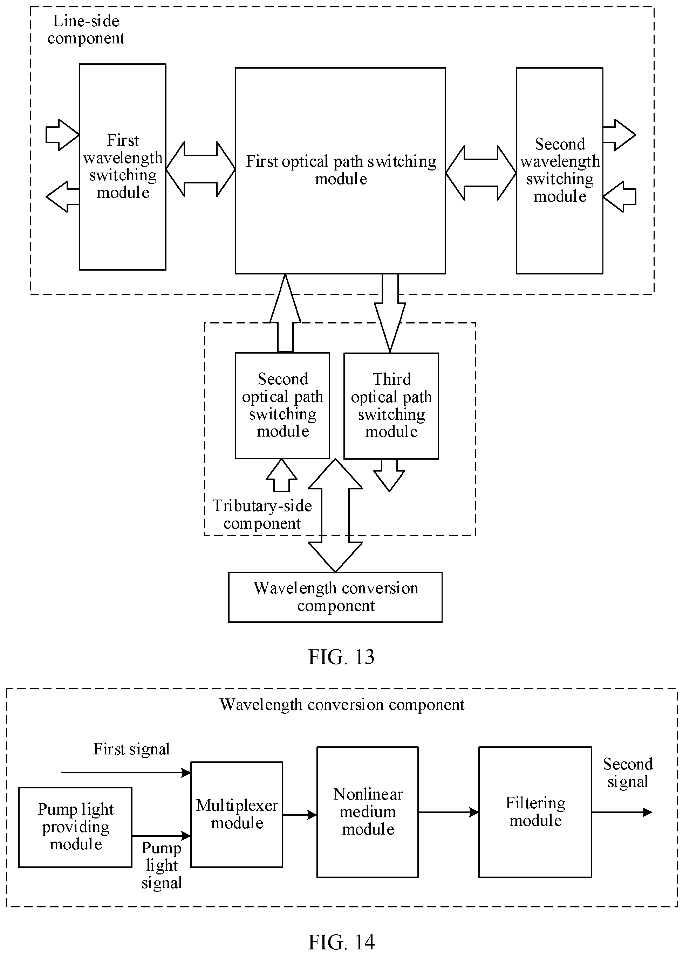

Optionally, FIG. 13 provides a further structure of an optical cross-connect system. Refer to FIG. 13. A wavelength conversion component is connected to Y second optical path switching modules, and is connected to Z third optical path switching modules. Y and Z each are greater than or equal to 1, and Y may be the same as or different from Z. Specifically, the wavelength conversion component includes an input port and an output port. Each of the Y second optical path switching modules includes a connection input port. One or more connection input ports of each second optical path switching module are connected to the output port of the wavelength conversion component in a one-to-one manner. Each third optical path switching module includes a connection output port. One or more connection output ports of each third optical path switching module are connected to the input port of the wavelength conversion component in a one-to-one manner. When there are a plurality of port connections, it indicates that a same second optical path switching module can output a plurality of beams of signals at the same time for wavelength conversion.

In a plurality of first optical path switching modules, it is assumed that a first optical path switching module is configured to input a first signal to a same second wavelength switching module, and in the second wavelength switching module, there is a signal having a same wavelength as the first signal. The first optical path switching module inputs the first signal to one of the Z third optical path switching modules by using an optical path switching function. The third optical path switching module inputs the first signal to the wavelength conversion component by using the optical path switching function. The wavelength conversion component converts the first signal into a second signal, and inputs the second signal to one of the Y second optical path switching modules. A wavelength of the first signal is different from a wavelength of the second signal, and the wavelength of the second signal does not conflict with a wavelength of another signal sent to at least one second wavelength switching module. The second optical path switching module inputs the second signal to a first optical path switching module. The first optical path switching module inputs the second signal to one of the at least one second wavelength switching module by using the optical path switching function. The second wavelength switching module combines the second signal and received other signals, and outputs a combined signal. The first signal and the second signal may pass through a same first optical path switching module or different first optical path switching modules. In this way, the wavelength conversion component is connected to the second optical path switching module. After the second signal enters the second optical path switching module, the second signal can be input to the first optical path switching module from any add port, so that the second signal can be input from any input port of the second wavelength switching module. In this way, flexibility of cross-connection is improved while wavelength conversion is supported.

Optionally, to simplify control logic, the second signal is still sent to a second wavelength switching module to which the first signal is originally sent for output, and is still sent to a first optical path switching module to which the first signal is originally sent for switching. This is merely an example for description. A specific signal transmission path may be scheduled based on an actual requirement. This is not limited in this embodiment of this application.

Optionally, the wavelength conversion component is connected to an output port of the first wavelength switching module, and is connected to an input port of the first optical path switching module. The first wavelength switching module inputs the first signal to the wavelength conversion component. The wavelength conversion component converts the first signal into the second signal by using a pump light signal corresponding to the first signal, and inputs the second signal to the input port of the first optical path switching module. In this way, wavelength conversion is first performed, and then the second signal enters the second wavelength switching module for output, so that no wavelength conflict exists.

Optionally, FIG. 14 is a diagram of a structure of a wavelength conversion component. Refer to FIG. 14. The wavelength conversion component includes a pump light providing module, a multiplexer module, a nonlinear medium module, and a filtering module. The multiplexer module is located on an optical path on which a pump light component outputs a pump light signal, and is located on an optical path on which the wavelength conversion component inputs a first signal. The nonlinear medium module is located on an optical path between the multiplexer module and the filtering module.

The pump light providing module outputs a pump light signal corresponding to the first signal. The multiplexer module combines the pump light signal corresponding to the first signal and the first signal in a one-to-one manner to obtain a combined signal, and inputs the combined signal to the nonlinear medium module. The nonlinear medium module performs transmission of the combined signal, obtains a nonlinearly converted signal by using a nonlinear effect, and inputs the nonlinearly converted signal to the filtering module. The filtering module filters a signal whose wavelength is not specified in the signal to obtain a second signal, inputs the second signal to an output port, and inputs the second signal to a first optical path switching module via the output port, or inputs the second signal to a second optical path switching module. If a wavelength of a beam of first signals is a first wavelength, and the second signal of a second wavelength needs to be obtained through conversion, the nonlinearly converted signal may include not only the second signal of the second wavelength, but also a signal that is not completely converted from the first signal, and may further include a pump light signal that is not completely converted. Therefore, the second signal whose wavelength is not the second wavelength needs to be filtered. In this way, when converting an optical signal of the first wavelength into an optical signal of the second wavelength, the wavelength conversion component directly converts the optical signal into an optical signal, instead of first converting the optical signal into an electrical signal and then modulating the electrical signal to obtain an optical signal, thereby reducing costs.

Optionally, the pump light providing module is a laser. The multiplexer module is a MUX. The nonlinear medium module may include a highly nonlinear optical fiber, a silicon nitride waveguide, an aluminum gallium arsenide waveguide, or the like. The filtering module is a filter.

Optionally, signals of different wavelengths may correspond to different pump light signals, and may also correspond to different nonlinear media.

Optionally, in another implementation of the wavelength conversion component, the wavelength conversion component may first convert an optical signal into an electrical signal, and then convert the electrical signal into an optical signal, to implement wavelength conversion.

Optionally, an optical cross-connect system is further connected to a controller, and the controller determines that there is a signal that suffers a wavelength conflict. For example, each first wavelength switching module outputs a signal of the first wavelength, optical dropping is not performed on the signal of the first wavelength, and there is also a signal of the first wavelength in add signals. In this case, when the signal of the first wavelength is switched to a second wavelength switching module, a wavelength conflict exists in the signal of the first wavelength. The controller controls the first optical path switching module to output a beam of signals of the first wavelength to the wavelength conversion component, or controls the first optical path switching module and a third optical path switching module to output a beam of signals of the first wavelength to the wavelength conversion component for wavelength conversion processing, and then controls the second optical path switching module to input converted signals to the first optical path switching module. The controller may be a controller that controls the first optical path switching module, the second optical path switching module, and the third optical path switching module. For example, when the controller controls a signal input from an input port of the first optical path switching module to be switched to an output port, it is determined that two beams signals of the first wavelength need to be switched to a second port and a third port, and the second port and the third port are connected to a same second wavelength switching module. In this case, a signal of the first wavelength switched to the second port is switched to an output port connected to the wavelength conversion component. When a signal of the second wavelength is input into the wavelength conversion component, the controller controls the signal of the second wavelength to be switched to the second port. In this case, wavelengths of signals output from the second port and the third port are different.

In this application, terms such as "first" and "second" are used to distinguish between same items or similar items that have basically same purposes or functions. It should be understood that there is no logical or time sequence dependency between "first" and "second", and a quantity and an execution sequence are not limited. It should be further understood that, although the terms such as "first" and "second" are used to describe various elements in the following description, these elements should not be limited by the terms. These terms are simply used to distinguish one element from another. For example, without departing from the scope of various examples, a second optical path switching module may be referred to as a first optical path switching module, and similarly, the first optical path switching module may be referred to as the second optical path switching module. Both the second optical path switching module and the first optical path switching module may be optical switching matrices, and in some cases, may be separate and different optical switching matrices.

In this application, the term "at least one" means one or more, and the term "a plurality of" means two or more.

The foregoing descriptions are merely example implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. An optical cross-connect system, comprising a line-side component and a tributary-side component, wherein the line-side component comprises a plurality of first wavelength switching modules, a first optical path switching module, and a plurality of second wavelength switching modules, and the tributary-side component comprises a second optical path switching module;
the first wavelength switching module is connected to the first optical path switching module, the first optical path switching module is connected to each second wavelength switching module, and the second optical path switching module is connected to the first optical path switching module;
each of the first wavelength switching modules is configured to: receive a line-side signal, and output the line-side signal to the first optical path switching module;
the first optical path switching module is configured to output a pass-through signal in the line-side signal to a first target second wavelength switching module among the plurality of second wavelength switching modules;
the second optical path switching module is configured to: receive an add signal, and output the add signal to the first optical path switching module through optical path switching;
the first optical path switching module is further configured to output the add signal to a second target second wavelength switching module among the plurality of second wavelength switching modules; and
each second wavelength switching module is configured to output the received signal.

2. The optical cross-connect system according to claim 1, wherein the tributary-side component further comprises a third optical path switching module;
the first optical path switching module is further configured to output a drop signal in the line-side signal to the third optical path switching module; and
the third optical path switching module is configured to: receive the drop signal, and output the drop signal through optical path switching.

3. The optical cross-connect system according to claim 1 or 2, wherein the optical cross-connect system further comprises a wavelength conversion component, an input port of the wavelength conversion component is connected to an output port of at least one first optical path switching module in a one-to-one manner, and an output port of the wavelength conversion component is connected to an input port of the at least one first optical path switching module in a one-to-one manner; and
the wavelength conversion component is configured to: receive a first signal input by the at least one first optical path switching module, and convert the first signal into a second signal, wherein a wavelength of the first signal is different from a wavelength of the second signal, the wavelength of the first signal suffers from wavelength conflict in the plurality of second wavelength switching modules, and the wavelength of the second signal is free from wavelength conflict in at least one second wavelength switching module; and
input the second signal to the at least one first optical path switching module.

4. The optical cross-connect system according to claim 2, wherein the optical cross-connect system further comprises a wavelength conversion component, an input port of the wavelength conversion component is connected to a drop output port of at least one third optical path switching module in a one-to-one manner, and an output port of the wavelength conversion component is connected to an add input port of at least one second optical path switching module;
the at least one third optical path switching module is further configured to: receive a first signal input by the first optical path switching module, and input the first signal to the wavelength conversion component, wherein a wavelength of the first signal suffers from wavelength conflict in the plurality of second wavelength switching modules;
the wavelength conversion component is configured to: convert the first signal into a second signal, and input the second signal to the at least one second optical path switching module, wherein a wavelength of the first signal is different from a wavelength of the second signal, and the wavelength of the second signal is free from wavelength conflict in at least one second wavelength switching module; and
the at least one second optical path switching module is further configured to input the second signal to the first optical path switching module.

5. The optical cross-connect system according to claim 3 or 4, wherein the wavelength conversion component comprises a pump light providing module, a multiplexer module, a nonlinear medium module, and a filtering module;
the pump light providing module is configured to input a pump light signal corresponding to the first signal to the multiplexer module;
the multiplexer module is configured to: receive the pump light signal corresponding to the first signal and the first signal, combine the pump light signal corresponding to the first signal and the first signal to obtain a combined signal, and input the combined signal to the nonlinear medium module;
the nonlinear medium module is configured to: obtain a nonlinearly converted signal based on the first signal and the pump light signal in the combined signal, and input the nonlinearly converted signal to the filtering module; and
the filtering module is configured to: perform filtering on the nonlinearly converted signal to obtain the second signal, and output the second signal.

6. The optical cross-connect system according to any one of claims 1 to 5, wherein each first wavelength switching module is connected to at least one input port of each first optical path switching module, and each second wavelength switching module is connected to at least one output port of each first optical path switching module; and
each first optical path switching module is configured to: control an optical path between the input port and the output port, and output the pass-through signal and the add signal to a corresponding second wavelength switching module.

7. The optical cross-connect system according to any one of claims 2 to 6, wherein there are a plurality of first optical path switching modules, and the line-side component further comprises a fourth optical path switching module;
each first wavelength switching module is connected to at least one input port of each fourth optical path switching module, and each second wavelength switching module is connected to at least one output port of each fourth optical path switching module;
an add port of each second optical path switching module is connected to at least one input port of each fourth optical path switching module, and a drop port of each third optical path switching module is connected to at least one output port of each fourth optical path switching module; and
the fourth optical path switching module is configured to: when the at least one first optical path switching module is faulty, replace the at least one first optical path switching module in performing optical switching processing.

8. The optical cross-connect system according to claim 1 or 2, wherein there are a plurality of second optical path switching modules, and the plurality of second optical path switching modules comprise a first group of switching modules and a second group of switching modules;
each second optical path switching module in the first group of switching modules is connected to the first optical path switching module; and each second optical path switching module in the second group of switching modules is connected to at least two second optical path switching modules in the first group of switching modules;
the second group of switching modules is configured to: receive the add signal, and input the add signal to the first group of switching modules through optical path switching, wherein signals of a same wavelength sent by a same second optical path switching module in the second group of switching modules are sent to different second optical path switching modules in the first group of switching modules; and
the first group of switching modules is configured to input the add signal to the first optical path switching module through optical path switching.

9. The optical cross-connect system according to claim 8, wherein each second optical path switching module in the second group of switching modules is connected to each second optical path switching module in the first group of switching modules.

10. The optical cross-connect system according to claim 2, wherein there are a plurality of third optical path switching modules, and the plurality of third optical path switching modules comprise a third group of switching modules and a fourth group of switching modules;
each third optical path switching module in the third group of switching modules is connected to the first optical path switching module; and each third optical path switching module in the fourth group of switching modules is connected to at least two third optical path switching modules in the third group of switching modules;
the third group of switching modules is configured to: receive the drop signal, and input the drop signal to the fourth group of switching modules, wherein signals of a same wavelength received by a same second optical path switching module in the fourth group of switching modules are from different third optical path switching modules in the third group of switching modules; and
the fourth group of switching modules is further configured to output the drop signal through optical path switching.

11. The optical cross-connect system according to claim 10, wherein each third optical path switching module in the fourth group of switching modules is connected to each third optical path switching module in the third group of switching modules.

12. The optical cross-connect system according to any one of claims 1 to 11, wherein a quantity of first wavelength switching modules and a quantity of second wavelength switching modules are greater than or equal to 64.

13. The optical cross-connect system according to any one of claims 1 to 12, wherein both the first optical path switching module and the second optical path switching module are micro-electro-mechanical system optical cross-connect apparatuses or waveguide optical switch arrays.

14. The optical cross-connect system according to any one of claims 1 to 13, wherein the first wavelength switching module and the second wavelength switching module are wavelength selective switches WSSs; or
the first wavelength switching module is a demultiplexer DMUX, and the second wavelength switching module is a multiplexer MUX; or
the first wavelength switching module and the second wavelength switching module are arrayed waveguide gratings AWGs.

15. An optical cross-connect network, comprising a plurality of optical cross-connect systems according to any one of claims 1 to 14, wherein
each of the plurality of optical cross-connect systems is connected to at least one other optical cross-connect system.
